# EUROPÄISCHE PATENTSCHRIFT

(11) **EP 2 730 202 B1**
(45) Veröffentlichungstag und Bekanntmachung des Hinweises auf die Patenterteilung: **22.06.2016**
(21) Anmeldenummer: 13005010.7
(22) Anmeldetag: 19.10.2013
(51) Int. Cl.: A47J 39/02, A47J 37/00, A47J 37/01, A47J 36/24, A47J 37/06

(54) **Salamander**
Salamander
Salamandre

(30) Priorität: 10.11.2012 DE 202012010786 U
(43) Veröffentlichungstag der Anmeldung: 14.05.2014
(73) Patentinhaber: Hellweg Marketing GmbH, 33154 Salzkotten (DE)
(72) Erfinder: Bartscher, Hans, 59590 Geseke (DE)
(74) Vertreter: Schober, Mirko

(56) Entgegenhaltungen:
- EP-A1- 1 532 908
- FR-A1- 2 957 507
- FR-A3- 2 679 433
- JP-A- 2005 246 052

## Beschreibung

Die Erfindung betrifft einen Salamander nach dem Oberbegriff des Anspruchs 1.

Entsprechende Salamander dienen zum Überbacken (Gratinieren) und Warmhalten von Speisen in der Küche und weisen dazu eine beheizte Haube auf, die höhenverstellbar ausgebildet ist, um diese der Höhe des Tellers, der auf einem als Abstellunterlage ausgebildeten Unterteil des Salamanders abgestellt ist, und der darauf befindlichen, warmzuhaltenden Speise anpassen zu können. Bekannt ist dazu mit einem Gegengewicht zu arbeiten, welches abgesenkt wird, wenn die Haube nach oben gefahren bzw. angehoben wird, wenn die Haube nach unten gefahren wird. Aus EP 0 752 227 B1 ist ein gattungsgemäßer Salamander bekannt, bei welchem die Haube an einer massiven Säule mechanisch arretierbar ist, etwa durch Einrasten oder dergleichen.

Ein weiterer Salamander ist aus EP 1 532 908 A1 bekannt. Bei diesem Salamander handelt es sich ebenfalls um einen mit Gegengewicht. Angetrieben wird dieser Salamander, indem die Seilscheiben des Zugseils für das Gegengewicht elektromotorisch angetrieben werden, um die Haube zu heben oder zu senken. Die Verstellung kann auch manuell erfolgen; dazu wird ein mit der Haube beweglicher Magnet eingesetzt, welcher mit einem Näherungsschalter zusammenwirkt, um die Endlage der Haube zu bestimmen. Die Arretierung der Haube erfolgt ausschließlich über die Selbsthemmung des Elektromotorgetriebes und die Reibung des Zugseils gegen die blockierten Seilscheiben, also ausschließlich mechanisch.

Die Mechanik mit Gegengewicht ist sehr voluminös, die genannte Arretierung durch mechanisches Einrasten ist fehleranfällig.

Aufgabe der vorliegenden Erfindung ist es, einen Salamander der eingangs genannten Art anzugeben, bei welchem diese Nachteile nicht auftreten und der in der Gebrauchsfähigkeit Vorteile bietet.

Gelöst wird diese Aufgabe durch einen Salamander mit den Merkmalen des Anspruchs 1, vorteilhafte Ausführungsformen finden sich in den Unteransprüchen.

Erfindungsgemäß ist vorgesehen, die Haube durch magnetische Wirkung gegenüber der Führungssäule in der gewünschten Höhenposition zu fixieren.

Dies kann auf unterschiedliche Weise bewerkstelligt werden. Wesentlich ist, dass eine magnetische Wechselwirkung zwischen der Haube, in der die Führungssäule verschieblich geführt ist, und der Führungssäule hergestellt wird.

Beispielsweise kann die Energieversorgung der in der Haube ohnehin vorgesehenen Heizeinrichtung auch genutzt werden, um einen Elektromagneten zu betreiben, der in der Haube oder der Führungssäule angeordnet ist. Um zur Arretierung in einer bestimmten Höhenposition zu kommen, wird dann der Elektromagnet eingeschaltet und wechselwirkt mit einem entsprechenden Gegenmagnet bzw. einem magnetisierbaren Material am entsprechenden Gegenstück. Auch ist es möglich, in Abständen in der Führungssäule etwa Permanentmagneten oder magnetisierbare Materialien und in der Haube einen entsprechend gegenpoligen Elektro- oder Permanentmagneten vorzusehen. Liegt der Magnet in der Haube auf der Höhe eines der Magneten in der Führungssäule, so ist die Anziehungskraft zwischen Führungssäule und Haube am größten und ist dabei so ausgelegt, dass dadurch das Eigengewicht der Haube getragen werden kann und diese in der Höhenposition arretiert wird. Entweder durch, ggf. schaltergesteuertes, Ausschalten des Magneten in der Haube oder in der Führungssäule oder durch Muskelkraft kann die Haube aus ihrer Arretierlage in eine andere Lage höhenverschoben werden.

Es ist auch denkbar, in der Führungssäule, durch welche insbesondere die Versorgungsleitungen für die Heizeinrichtung und die Elektromagneten geführt werden, in den einzustellenden Höhenpositionen entlang der Säule eine Mehrzahl Elektromagnete zu verteilen, die wiederum mit einem oder mehreren Elektromagneten oder Permanentmagneten oder magnetisierbarem Material in der Haube in der oben geschilderten Weise zusammenwirken.

Bevorzugt sind beabstandet voneinander zwei Führungssäulen oder in den Ecken der Unterlage vier Führungssäulen vorgesehen. Alle diese Säulen können wie oben beschrieben magnetisch oder magnetisierbar ausgebildet sein und wie oben beschrieben mit der Haube magnetisch zusammenwirken. Diese Bauweise erlaubt zum einen, dass der Salamander von mehreren Seiten zugänglich ist, was etwa in einer Großküche von Vorteil ist. Zum anderen können die Magnetfelder auf mehrere Magnete verteilt werden, was die Baugröße und Leistung der einzelnen Magnete reduziert und trotzdem eine sichere Arretierung der Haube in der gewünschten Höhenposition sicherstellt.

Die Erfindung wird nachfolgend kurz anhand der in den Figuren 1 bis 3 schematisch gezeigten Ausführungsbeispiele erläutert.
- Figur 1 -: zeigt eine perspektivische Darstellung eines erfindungsgemäßen Salamanders in einer ersten Ausführungsform mit zwei Führungssäulen,
- Figur 2 -: zeigt eine Frontansicht in einer ersten Haubenpositon (A), in einer zweiten Haubenposition (B) und eine Draufsicht auf das Unterteil (C) der in Figur 1 gezeigten Ausführungsform,
- Figur 3 -: zeigt eine Frontansicht in einer ersten Haubenpositon (A), in einer zweiten Haubenposition (B) und eine Draufsicht auf das Unterteil (C) einer zweiten Ausführungsform mit vier Führungssäulen.

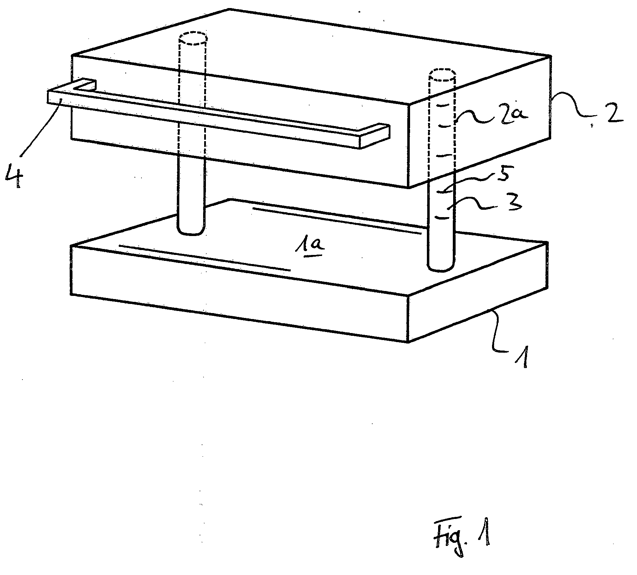

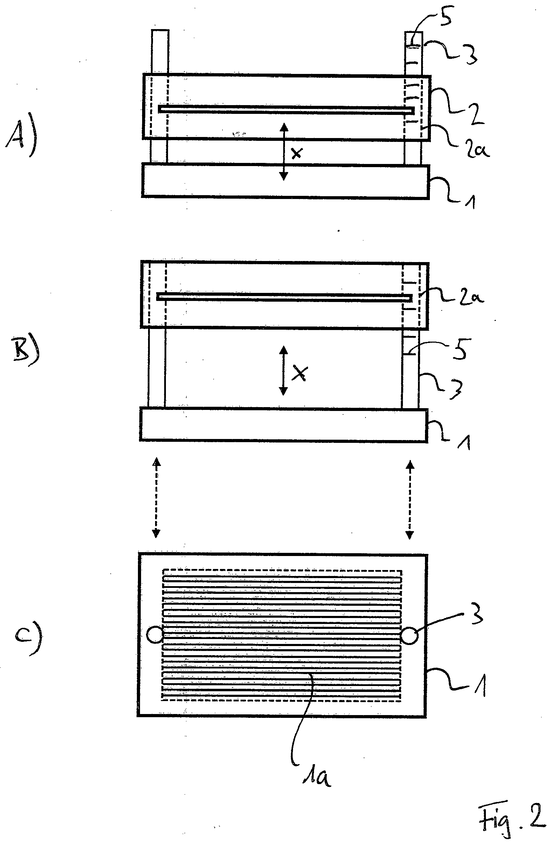

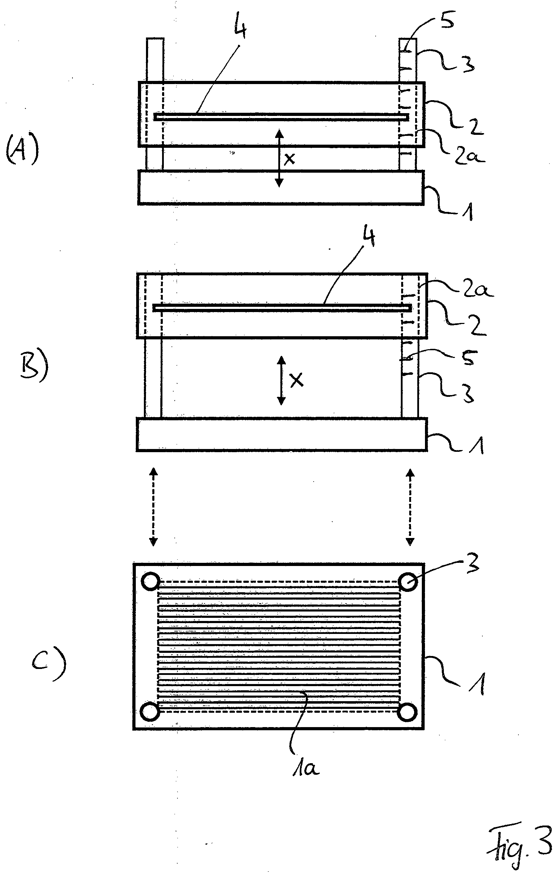

Der in den Figuren dargestellte Salamander weist ein Unterteil 1 auf, welches eine Auflagefläche 1a zum Abstellen von Tellern oder dergleichen mit Speisen darauf aufweist. Am Unterteil ist wenigstens eine, im gezeigten Beispiel zwei (Fig. 1, 2) oder vier (Fig. 3) Führungssäulen 3 vorgesehen, an denen eine oberhalb des Unterteils 1 angeordnete Haube 2 verschieblich und höhenverstellbar geführt ist. Dazu weist die Haube 2 Führungen 2a auf, in denen die Führungssäulen verschieblich gelagert sind. Die Haube 2 verfügt über eine Energieversorgung, die durch die Säulen 3 vom Unterteil 1 zur Haube 2 geführt sein können und eine (nicht gezeigte) Heizeinrichtung speisen, mit der das auf der Ablagefläche 1a abgelegte Gut beheizt werden kann. Weiter ist an der Haube 2 ein Griff 4 vorgesehen, welcher das einfachere Verstellen der Haube 2 in Verschieberichtung X ermöglicht.

Führungssäulen 3 und die Haube 2 sind wie oben beschrieben so ausgebildet, dass sie magnetisch miteinander zusammenwirken, so dass die Haube 2 durch magnetische Kraft in der gewünschten Höhenposition gehalten wird. Bevorzugt sind, wie durch Pos. 5 angedeutet, in den Führungssäulen oder an denselben eine Mehrzahl - bevorzugt äquidistant entlang der Führungssäulen angeordnete - Magnetbereiche vorgesehen, die einzelne Höhenverstellpositionen der Haube repräsentieren. Diese Bereiche 5 können durch Permanentmagnete, Elektromagnete oder sonstige magnetisierbare Materialien realisiert sein. Im Bereich der Führung 2a ist in der Haube 2 zu jeder Säule ein entsprechendes magnetisches Gegenstück vorgesehen, welches ebenfalls durch Permanentmagnete, Elektromagnete oder sonstige magnetisierbare Materialien realisiert sein kann. Wichtig ist, dass der Magnetbereich 5 und das entsprechende Gegenstück in der Haube eine magnetische Anziehungskraft aufeinander ausüben können, die dafür sorgt, dass die Haube in der entsprechenden Höhe gehalten wird. Diese Anziehungskraft kann mit Elektromagneten geschaltet werden, so ist sogar eine stufenlose Höhenverstellung möglich, oder permanent vorhanden sein, wobei sie über die Länge der Säulen periodisch variiert, so das zwischen einzelnen Höhenpositionen durch Muskelkraft die Haube von einer Position in die nächste verschiebbar ist.

Auf diese Weise kann der Salamander mit relativ dünnen Führungssäulen gebaut werden, so dass zum Einbringen und Entnehmen von Speisen viel Platz geschaffen und der Salamander von mehreren Seiten zugänglich gemacht wird.

## Patentansprüche

1. Salamander mit einem Unterteil (1) mit einer Abstellfläche (1a) und einer dem Unterteil gegenüber höhenverstellbaren Haube (2), die eine Heizeinrichtung aufweist, wobei die Haube (2) zur Höhenverstellung an wenigstens einer am Unterteil (1) gehaltenen Führungssäule (3) geführt ist, und eine Arretiervorrichtung vorgesehen ist, mit der die Haube (2) in einer gewünschten Höhenposition gegenüber der wenigstens einen Führungssäule (3) festlegbar ist,
**dadurch gekennzeichnet,**
**dass** zur Arretierung der Haube (2) an der wenigstens einen Führungssäule (3) die Haube (2) durch magnetische Wirkung gegenüber der Führungssäule (3) in einer gewünschten Höhenposition fixierbar ist.

2. Salamander nach Anspruch 1,
**dadurch gekennzeichnet,**
**dass** in oder an der wenigstens einen Führungssäule (3) in vorgegebenen Höheneinstellungen entsprechenden Abständen wenigstens eine magnetische oder magnetisierbare Einrichtung und dass wenigstens eine mit dieser zusammenwirkende magnetisierbare oder magnetische Vorrichtung in oder an der Haube (2) angeordnet sind.

3. Salamander nach Anspruch 2,
**dadurch gekennzeichnet,**
**dass** es sich bei den magnetischen Einrichtungen um Permanentmagnete und/oder Elektromagnete handelt.

4. Salamander nach Anspruch 2,
**dadurch gekennzeichnet,**
**dass** in der Haube (2) wenigstens ein Elektromagnet vorgesehen ist, der insbesondere durch die Energieversorgung der Heizeinrichtung mit Energie versorgbar ist, und dass in der wenigstens einen Säule (3) eine Mehrzahl, insbesondere äquidistant über den Längsverlauf der Säule (3) angeordnete, magnetisierbare oder magnetische Einrichtungen vorgesehen sind, die zum Zusammenwirken mit dem Elektromagnet in der Heizeinrichtung derart ausgelegt sind, dass die Zusammenwirkung einer der magnetisierbaren oder magnetischen Einrichtungen bei Einschalten des Elektromagneten eine Arretierung der Haube (2) durch magnetische Anziehung zwischen dem Elektromagneten in der Haube (2) und der der gewünschten Höheneinstellung entsprechenden magnetischen oder magnetisierbaren Einrichtung in oder an der Säule (3) bewirkt wird.

5. Salamander nach einem der vorigen Ansprüche,
**dadurch gekennzeichnet,**
**dass** wenigstens zwei voneinander beabstandete Führungssäulen (3) vorgesehen sind.

6. Salamander nach Anspruch 5,
**dadurch gekennzeichnet,**
**dass** in je einer Ecke des im Wesentlichen viereckigen Unterteils (1) jeweils eine Führungssäule (3) vorgesehen ist.

## Claims

1. Salamander with a lower part (1) with a shelf surface (1a) and a hood (2) which is vertically adjustable relative to the lower part and which has a heating device, wherein the hood (2) is guided for vertical adjustment on at least one guide pillar (3) held on the lower part (1), and a locking device is provided with which the hood (2) can be fixed in a desired vertical position relative to the at least one guide pillar (3), **characterised in that**
in order to lock the hood (2) on the at least one guide pillar (3) the hood (2) can be fixed by magnetic action in a desired vertical position relative to the guide pillar (3).

2. Salamander according to claim 1,
**characterised in that**
at least one magnetic or magnetisable unit is arranged on the at least one guide pillar (3) at intervals corresponding to predetermined vertical positions, and that at least one magnetisable or magnetic device, which interacts with the magnetic unit, is/are arranged on the hood (2).

3. Salamander according to claim 2
**characterised in that**
the magnetic units are permanent magnets and/or electromagnets.

4. Salamander according to claim 2
**characterised in that**
at least one electromagnet is provided in the hood (2) and can be supplied in particular with energy through the energy supply of the heating device, and that a plurality of magnetisable or magnetic units are provided in the at least one pillar (3) arranged in particular equidistantly over the longitudinal path of the pillar (3), wherein these units are designed to interact with the electromagnet in the heating device in such a way that when the electromagnet is switched on the interaction of one of the magnetisable or magnetic units causes a locking of the hood (2) through magnetic attraction between the electromagnets in the hood (2) and the magnetic or magnetisable unit corresponding to the desired vertical position in or on the pillar (3).

5. Salamander according to one of the preceding claims
**characterised in that**
at least two guide pillars are provided spaced apart from one another.

6. Salamander according to claim 5
**characterised in that**
a guide pillar (3) is provided in each one corner of the substantially rectangular lower part (1).

## Revendications

1. Salamandre comprenant une partie inférieure (1) avec une surface de pose (la) et un plafond (2), qui, réglable en hauteur par rapport à la partie inférieure, présente une installation de chauffage, sachant que, pour le réglage en hauteur, le plafond (2) est guidé sur au moins une colonne de guidage (3), qui est fixée à la partie inférieure (1), et qu'un dispositif de blocage est prévu, au moyen duquel le plafond (2) peut être positionné à une hauteur désirée, par rapport à la colonne de guidage (3) au moins prévue,
**caractérisée en ce que**,
pour le blocage du plafond (2) sur la colonne de guidage (3) au moins prévue, ledit plafond (2) peut être fixé magnétiquement à une hauteur désirée par rapport à la colonne de guidage (3).

2. Salamandre selon la revendication 1,
**caractérisée en ce que**,
dans ou sur la colonne de guidage (3) au moins prévus, au moins un dispositif magnétique ou magnétisable est prévu à des intervalles correspondant à des réglages de hauteur prédéterminés, et qu'un dispositif magnétisable ou magnétique, coopérant avec celui-ci, est prévu dans ou sur le plafond (2).

3. Salamandre selon la revendication 2,
**caractérisée en ce que**
les dispositifs magnétiques sont des aimants permanents et / ou des électroaimants.

4. Salamandre selon la revendication 2,
**caractérisée en ce que**,
dans le plafond (2), est prévu au moins un électroaimant, qui, en particulier, peut être alimenté en énergie par le système d'alimentation en énergie de l'installation de chauffage, et que, dans la colonne de guidage (3) au moins prévue, est prévue une pluralité de dispositifs magnétisables ou magnétiques, qui, disposés, en particulier à équidistance, sur l'étendue longitudinale de la colonne de guidage (3) et destinés à coopérer avec l'électroaimant, dans l'installation de chauffage, sont conçus de telle manière que la coopération de l'un des dispositifs magnétisables ou magnétisés provoque, lors de la connexion de l'électroaimant, un blocage du plafond (2), par attraction magnétique, exercée entre ledit électroaimant, prévu dans le plafond (2), et le dispositif magnétisable ou magnétique, prévu dans ou sur la colonne de guidage (3), qui correspond au réglage de hauteur désiré.

5. Salamandre selon l'une des revendications précédentes,
**caractérisée en ce que**
deux colonnes de guidage (3), distancées l'une de l'autre, sont au moins prévues.

6. Salamandre selon la revendication 5,
**caractérisée en ce que**,
dans chacun des angles de la partie inférieure (1), essentiellement quadrangulaire, est prévue une colonne de guidage (3).
